# EUROPEAN PATENT APPLICATION

(11) **EP 4 418 632 A1**
(43) Date of publication of application: **21.08.2024**
(21) Application number: 24160378.6
(22) Date of filing: 04.12.2020
(51) Int. Cl.: H04L 67/12, H04L 67/565, H04L 69/08

(54) **SYSTEM AND METHODS FOR AUTONOMOUS MONITORING AND RECOVERY IN HYBRID ENERGY MANAGEMENT**

(30) Priority: 13.12.2019 US 201962947797 P
(62) Divisional of application: 20825102.5
(71) Applicant: IHI Terrasun Solutions Inc., Chicago, Illinois 60606 (US)
(72) Inventor: OBER, Brian, Lake in the Hills, 60156 (US); DOHERTY, Tristan, Somerville, 02144 (US); CRANE, Sergey, Somerville, 02144 (US)
(74) Representative: Cooley (UK) LLP

(57) **Abstract**

A method includes receiving, at a translation engine operably coupled to and associated with a first asset from a plurality of assets associated with an energy delivery system, a signal representing operational data from the first asset. The method also includes translating, via the translation engine, the operational data from a first protocol to a second protocol, thereby producing a first modified operational data. The method also includes translating, via the translation engine, at least one of a data label, a unit of measurement, or a value of the first modified operational data from a first data type to a second data type, to produce a second modified operational data. The method further includes sending a signal to cause storage of the second modified operational data in a repository accessible to a user.

## Description

### Cross-Reference to Related Applications

This application claims priority to and the benefit of U.S. Provisional Patent Application No. 62/947,797, titled System and Methods for Autonomous Monitoring and Recovery in Hybrid Energy Management," filed December 13, 2019, the disclosure of which is hereby incorporated by reference in its entirety.

### Background

An energy system usually incudes various types of equipment. For example, in a typical renewable energy deployment, solar panels, solar controllers, power conversion systems, battery systems, and battery controls, among others are combined to provide energy service for a customer. In addition, such deployment also includes other assets that are less obvious but also play a role in the healthy operations of the system, such as network switches, routers, data collection databases, and support applications.

Different equipment may use different protocols to communicate with other equipment and/or generate data having different types. For example, a Windows server from one brand may present itself differently than another Widows server from a different brand or a Linux server. Different battery manufacturers may also use different key metrics or units in characterizing the performance of their batteries. Such inconsistency among different equipment leads to a challenge for operators and data scientists to monitor and maintain the healthy operation of energy systems.

### Summary

Some embodiments described herein relate generally to autonomous monitoring and recovery in hybrid energy management. In some embodiments, a system includes a first translation engine operably coupled to and associated with a first asset having a first protocol and configured to generate data having a first data type. The system also includes a second translation engine operably coupled to and associated with a second asset having a second protocol different from the first protocol and configured to generate data having a second data type different from the first data type. The first translation engine is configured, during operation, to (1) receive a signal, representing first data of the first data type, from the first asset, (2) translate the first data from the first protocol to a third protocol, (3) translate at least one of a label or a value of the first data from the first data type, to produce a first transformed data, (4) append a first set of at least one semantic label to the first transformed data, the first set of at least one semantic label representing a relationship between the first asset and the second asset, and (5) send a signal to cause storage of the first transformed data in a repository accessible to a user. The second translation engine is configured, during operation, to: (1) receive a signal, representing second data of the second data type, from the second asset, (2) translate the second data from the second protocol to the third protocol, (3) translate at least one of a label or a value of the second data from the second data type, to produce a second transformed data, (4) append a second set of at least one at least one semantic label to the second transformed data, the second set of at least one semantic label representing a relationship between the first asset and the second asset, and (5) send a signal to cause storage of the second transformed data in the repository. The storage of the first transformed data and the storage of the second transformed data occurs in time-series order, and the repository is configured to be queried using a query that does not include a reference to a storage location.

In some embodiments, a method includes receiving, at a translation engine operably coupled to and associated with a first asset from a plurality of assets associated with an energy delivery system, a signal representing operational data from the first asset. The method also includes translating, via the translation engine, the operational data from a first protocol to a second protocol, thereby producing a first modified operational data. The method also includes translating, via the translation engine, at least one of a data label, a unit of measurement, or a value of the first modified operational data from a first data type to a second data type, to produce a second modified operational data. The method further includes sending a signal to cause storage of the second modified operational data in a repository accessible to a user.

### Brief Description of the Drawings

The drawings are primarily for illustration purposes and are not intended to limit the scope of the subject matter described herein. The drawings are not necessarily to scale; in some instances, various aspects of the disclosed subject matter disclosed herein may be shown exaggerated or enlarged in the drawings to facilitate an understanding of different features. In the drawings, like reference characters generally refer to like features (e.g., functionally similar and/or structurally similar elements).
FIG. 1 shows a schematic of a system for autonomous monitoring and recovery in hybrid energy management, according to an embodiment.
FIG. 2 illustrates a hierarchical representation of an energy storage system, according to an embodiment.
FIG. 3 shows a schematic of a system including an introspection engine for translation and label appending, according to an embodiment.
FIG. 4 is a flowchart illustrating a method of autonomous monitoring and recovery in hybrid energy management, according to an embodiment.
FIG. 5 illustrates a system for data analytics in hybrid energy management, according to an embodiment.

### Detailed Description

Some embodiments described herein are directed to systems and methods for autonomous monitoring and recovery in hybrid energy management. Systems and methods described herein employ holistic and comprehensive monitoring that allows collection of data from all equipment in a consistent way regardless of the management protocol, physical location, or data type used by the equipment. Some embodiments described herein employ universal asset identification and mapping, where a relabeling and remapping engine is disposed at the ingress of data processes such that each device has an asset identification that is consistent within the system. In addition, the metrics, names, units, and labels associated with the data can be transformed into a consistent system before entering into any data processing pipeline. Some embodiments described herein conduct data processing and fault correlation based on hierarchical understanding of an energy system, where each equipment is associated with hierarchical data representing the location or position of the equipment within the hierarchy. Such data can be used, e.g., for implementing machine learning and neural network algorithms consistently across various assets.

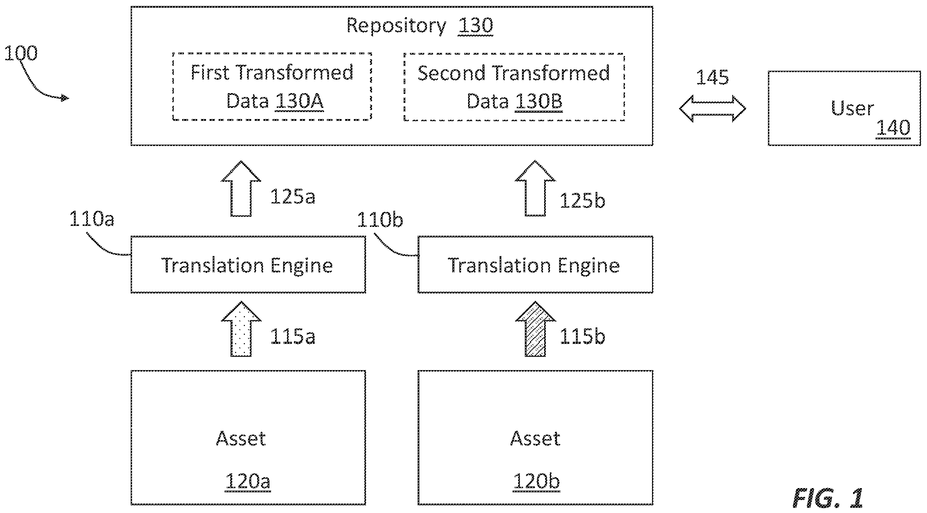

FIG. 1 shows a schematic of a system 100 for autonomous monitoring and recovery in hybrid energy management, according to an embodiment. The system 100 includes a first translation engine 110a operably coupled to and associated with a first asset 120a, which has a first protocol and is configured to generate data having a first data type. The system 100 also includes a second translation engine 110b operably coupled to and associated with a second asset 120b, which has a second protocol different from the first protocol and is configured to generate data having a second data type different from the first data type.

The first translation engine 110a is configured, during operation, to receive a signal 115a, representing first data of the first data type, from the first asset 120a. The first data is then translated from the first protocol to a third protocol (also referred to herein as a system consistent protocol). In addition, at least one of a label or a value of the first data is translated from the first data type to produce a first transformed data. The first translation engine 110a is also configured to append a first set of at least one semantic label to the first transformed data. The first set of at least one semantic label can represent a relationship between the first asset 120a and the second asset 120b. The first translation engine 110 is further configured to send a signal 125a to cause storage of the first transformed data in a repository 130 accessible to a user 140.

The second translation engine 110b is configured, during operation, to receive a signal 115b, representing second data of the second data type, from the second asset 120b. The second data is translated from the second protocol to the third protocol. In addition, at least one of a label or a value of the second data is translated from the second data type to produce a second transformed data. The second translation engine 120b is also configured to append a second set of at least one at least one semantic label to the second transformed data. The second set of at least one semantic label represents a relationship between the first asset and the second asset. The second translation engine 120b is further configured to send a signal 125b to cause storage of the second transformed data in the repository 130.

The storage of the first transformed data and the storage of the second transformed data occurs in time-series order in the repository 130. In some embodiments, the first transformed data and the second transformed data is configured as time-series data (also referred to as profiles, curves, traces, or trends). In some embodiments, the repository 130 includes a time series database (TSDB) that is configured for storing and serving time series through associated pairs oftime(s) and value(s) (i.e., using time as a key index). The repository 130 can include various types of non-SQL databases, such as Elastic, InfluxDB, MongoDB, Cassandra, Couchbase, Graphite, Prometheus, ClickHouse, OpenTSDB, DalmatinerDB, KairosDB, and RiakTS, among others.

In some embodiments, the repository 130 is configured to use one or more compression algorithms to efficiently manage data (e.g., the first transformed data 130A and/or the second transformed data 130B). In some embodiments, the repository 130 includes a non-transitory, processor-readable medium storing data and/or processor-executable instructions. In some embodiments, the repository 130 is configured to separate the set of fixed, discrete characteristics from the dynamic, continuous values into sets of points (also referred to as tags). For example, in the storage of device utilization data for performance monitoring, the fixed characteristics can include the name (e.g., "device utilization"), the units of measure (e.g., "%"), and a range (e.g., "from 0 to 1"). The dynamic values can include the utilization percentage and a timestamp. The separation can be used to efficiently store and index data for application purposes.

The repository 130 is configured to be queried using a query 145 that does not include a reference to a storage location (i.e., data location transparency). In some embodiments, network resources in the repository 130 are identified by their names, instead of their locations. For example, a file in the repository 130 can be accessed by a unique file name, and the actual data in the file can be stored in physical sectors distributed in different locations. In some embodiments, the repository 130 includes multiple servers disposed at different geographic locations, and these multiple servers are communicatively coupled to each other via a wired or wireless network.

In some embodiments, the repository 130 is configured to assign data into at least three categories and manage the data based on the category of the data. Without loss of generality, the three categories of data can be referred to as: (1) hot data; (2) warm data; and (3) cold data. Hot data include data that is frequently retrieved and/or used by the user 140, and this type of data is physically stored in a location that has low latency and high throughput for retrieval. On the other hand, the storage of hot data may also incur a higher cost per data unit. Warm data has a lower use frequency compared to hot data so the storage medium of warm data can have relaxed latency and/or throughput specification. Cold data has the lowest use frequency and can be stored in cost effective medium, such as object storage or tapes. In these embodiments, the repository 130 is configured to make this categorization transparent to the user 140. In other words, the query 145 from the user 140 does not include reference to the category of the data to be retrieved.

In some embodiments, the repository 130 includes a transparent interface gateway that is configured to provide a consistent data access interface to the user 140 (or an application used by the user 140). The repository 130 can include one or more processors to route and/or translate the query 140 to the physical location of the data to be retrieved (e.g., based on the name of the data). Such configuration allows a wide range of data use cases from short-viewed operational analysis to long-term petabyte level machine learning.

In some embodiments, the system 100 includes a renewable energy system, such as a solar energy system, a wind energy system, a biofuel system, a geothermal system, a wave energy system, or a hydroelectric power system. In some embodiments, the system 100 includes a hybrid of a renewable energy system and a fossil fuel energy system.

The first translation stage 110a and the second translation stage 110b (collectively referred to as translation engines 110) are configured to translate different protocols used by different assets into a common protocol so as to, e.g., facilitate further processing of data acquired from different assets. In some embodiments, the translation engines 110 can be implemented as software. In some embodiments, the translation engines 110, when configured as software, can be installed on the same processing unit. In some embodiments, the translation engines 110 can be implemented as firmware or hardware. In some embodiments, the translation engines 110 can have more than one processing stage. In some embodiments, the processing stages can be disposed in a distributed manner, i.e., different processing stages can be implemented at different locations.

In addition to protocol translation, the translation engines 110 are also configured to translate the value and/or the label of the data from different assets. The translation of data values can ensure that the translated data (also referred to herein as transformed data) is presented in a consistent manner regardless of the source of the data. For example, the first asset 120a may generate utilization data using the name "asset-utilization" with a value in total seconds in use. The first translation engine 110a can be configured to translate this utilization data using the name "device-utilization" and in terms of raw percentage (e.g., 0%-100%) for the entire system 100. In another example, the translation engines 110 can translate data values represented in different units into a common unit (e.g., from English to metric or vice versa). In some embodiments, the translation engines 110 can be configured to translate different types of data into a common data type. For example, the translation engines 110 can translate binary data, decimal data, and/or hexadecimal data into binary data.

In some embodiments, the label of data from the asset 120a or 120b can include a unique tag that can be applied to the data. This tag can be used to, e.g., identify the source asset (e.g., 120a or 120b), physical location of the source asset, or anything that can be represented as a key value pair. The translation engines 110 can be configured for ensuring that any labels are applied or transformed in a consistent manner.

In some embodiments, the translation engines 110a and the second translation engine 110b can be physically coupled to or disposed in close proximity of the first asset 120a and the second asset 120b, respectively. In these embodiments, the first translation engine 110a and the second translation engine 110b can receive the first data and the second data, respectively, via associated local connections, at high speed and low latency. In some embodiments, the first translation engine 110a and the second translation engine 110b can be disposed at locations that are remote from the first asset 120a and the second asset 120b, respectively. In these embodiments, the first translation engine 110a and the second translation engine 110b can be configured to receive the first data and the second data, respectively, via one or more networks. In some embodiments, the system 100 includes more than two translation engines (and accordingly more than two types of assets). Some of the translation engines can be disposed in close proximity of their associated assets, while other translation engines can be configured as remote translation engines.

The first asset 120a and the second asset 120b (collectively referred to as assets 120) can include any equipment in an energy system, including energy storage equipment and energy delivery equipment. For example, the assets 120 can include power generators, such as solar panels, wind turbines, diesel generators, and natural gas generators, among others. The assets 120 can also include energy storage devices, such as batteries, capacitors, and ultra-capacitors, among others. The assets 120 can also include power delivery system, such as transformers, transmission lines, uninterruptable power supply (UPS), power distribution electronics, and protection circuits, among others. The assets 120 can further include controllers for the above equipment. The assets 120 can also include equipment that is used for communications between different equipment in an energy system. For example, the assets 120 can include network switches, routers, data collection databases, and support applications.

The first data and the second data can include various types of data associated with the first asset 120a and the second asset 120b, respectively. For example, the first data and the second data can include any operational data associated with equipment in an energy system. In some embodiments, the first data and the second data can include raw data sent from sensors that acquire such data. For example, the first data and the second data can include measurement of voltage or current of energy storage devices. In some embodiments, the first data and the second data can include pre-processed data. For example, the first data and the second data can include state of health (SOH) information derived from measurements of voltage or current of energy storage systems.

The large variety of assets that can be included in the system 100 also leads to a large variety of protocols that can be used in the system 100. For example, the protocols can include data link protocols, such as discrete signaling (e.g., voltage or current signals) and serial connections, IEEE 802.15.4e, IEEE 802.11ah, WirelessHART, Z-Wave, Bluetooth, ZigBee, DASH7, HomePlug, G.9959, Long-term evolution advanced (LTE-A), LoRaWAN, Weightless, digital enhanced cordless telecommunications (DECT), DECT ultra-low energy (DECT/ULE), and EnOcean, among others. The protocols can also include network layer routing protocols, such as routing protocol for low-power and lossy networks (RPL), Cognitive RPL (CORPL), and Channel-aware routing protocol (CARP), among others. The protocols can also include network layer encapsulation protocols, such as IPv6 over low power wireless personal area network (6LoWPAN), 6TiSCH, IPv6 over networks of resource-constrained nodes (6Lo), IPv6 over G.9959, and IPv6 over Bluetooth Low Energy, among others. The protocols can also include session layer protocols, such as Modbus remote terminal unit (Modbus RTU), Modbus transmission control protocol (Modbus TCP), distributed network protocol 3 (DNP3), open platform communications - unified architecture (OPC-UA), message queue telemetry transport (MQTT), secure MQTT (SMQTT), advanced message queuing protocol (AMQP), constrained application protocol (CoAP), extensible messaging and presence protocol (XMPP), and data distribution service (DDS), among others.

The protocols can also include management protocols, such as IEEE 1905.1 (e.g., used for interconnection of heterogeneous data links), smart transducer interface (e.g., provided by IEEE 1451 and used to facilitate the management of different analog transducers and sensors), technical report 069 (TR-069, configured, e.g., for remote management of M2M devices by HTTP messages), OMA device management (OMA-DM, configured, e.g., for remote provisioning, updating and managing faulty issues of M2M devices), and Lightweight M2M (e.g., client-server protocol in which JSON (JavaScript Object Notation) messages are used for communication), among others. In some embodiments, the assets 120 in the system 100 can be communicatively coupled together via Internet of Things (IoT) technology, and the protocols in the system 100 can include any protocol used in IoT technology.

In some embodiments, the third protocol includes Prometheus Query Language (PromQL), which can be used for time series database storage. In some embodiments, at least one of the first or the second protocols can include PromQL.

In some embodiments, at least one of the first transformed data or the second transformed data is presented to the user in the form of an interactive map, for example via a graphical user interface (GUI) of a compute device. In these embodiments, the repository 130 can include an interactive user interface (not shown in FIG. 1) that is configured to present the interactive map. In addition to the transformed data (e.g., first transformed data and/or the second transformed data), the associated asset(s) (e.g., first asset 120a and/or second asset 120b) and the location(s) of the associated asset(s) in the energy system can be presented on the interactive map.

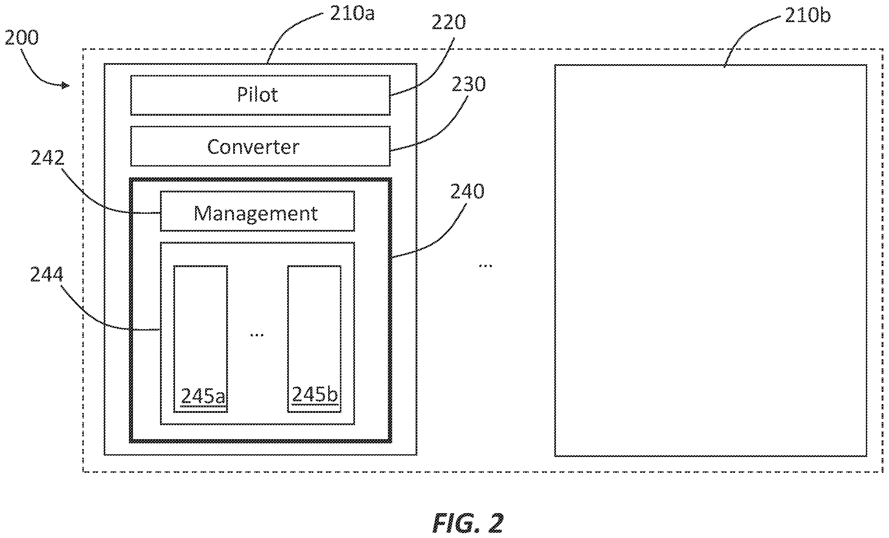

In some embodiments, the location of the associated asset is presented based on a hierarchical representation of the energy system. For example, the entire energy system can be presented on the interactive map and the associated asset can be highlighted. In some embodiments, the user 140 is allowed to click on the interactive map to select one or more other assets, and the transformed data associated with the selected asset(s) can be presented on the interactive map. In some embodiments, the hierarchical representation divides equipment in the energy system into multiple layers (also referred to as levels). The user 140 can be permitted, for example, to click on a representation of a piece of equipment within one layer, and clicking on the representation of the piece of equipment can cause the interactive map to show more details about the selected layer (e.g., presented as a magnified view of the selected layer). In this manner, the user 140 can, for example, quickly pinpoint the source of a "health" issue in the energy system (e.g., a maintenance state, an alarm condition, a malfunction, etc.). More information about hierarchical representation of energy systems is provided below with reference to, e.g., FIG. 2.

In some embodiments, the system 100 further includes a memory (not shown in FIG. 1) communicably coupled to the first translation engine 110a and/or the second translation engine 110b. The memory is configured to store hierarchical data representing relationships between a plurality of assets of the system 100, and the plurality of assets includes the first asset 120a and the second asset 120b. In these embodiments, the hierarchical data can be used to interpret the first set of semantic labels appended to the first transformed data and/or the second set of semantic labels appended to the second transformed data. For example, the system 100 can pinpoint the location of each one of the first asset 120a and the second asset 120b based on the associated semantic label and the hierarchical data.

In some embodiments, the system 100 includes more than one energy storage container. The first asset 120a can include or be associated with a first energy storage container and the second asset 120b can include or be associated with a second energy storage container. In some embodiments, the system 100 includes multiple energy systems. For example, each energy system in the multiple energy systems can be located at a different geolocation. The first asset 120a can be included in a first energy system and the second asset 120b can be included in a second energy system different from the first energy system. In some embodiments, the first asset 120a and the second asset 120b are included within a common energy system. More information about energy systems and containers is provided below with reference to, e.g., FIG. 2.

In some embodiments, the first translation engine 110a is configured, during operation, to append the first set of at least one semantic label to the first transformed data based on a static criteria (e.g., static over time). In some embodiments, the static criteria can be a user-specified parameter. For example, the static criteria can include a hierarchical representation of the system 100, in which each asset is assigned a layer number. The sematic label can include, for example, the layer number of the asset.

In some embodiments, the first translation engine 110a is configured, during operation, to append the first set of at least one semantic label to the first transformed data based on a dynamic criteria. In some embodiments, the dynamic criteria includes an algorithm. In some embodiments, the dynamic criteria is configured to support dynamic relationship manipulation within the system 100 and can be used to keep a running inventory of such dependencies. For example, an asset in the system 100 may have a dependency on the Ethernet port of a switch in order to provide service. In the event that the asset is connected to a different port, such a change can be automatically detected by the asset, the associated translation engine, and/or the repository 130, and the detected change can be updated.

In some embodiments, both the first translation engine 110a and the second translation engines 110b are configured, during operation, to append the appropriate set of semantic labels based on a static criteria. In some embodiments, the first translation engine 110a is configured to use a first static criteria and the second translation engine 110b is configured to use a second static criteria different from the first static criteria. In some embodiments, the two translation engines 110a and 110b are configured to use the same static criteria.

In some embodiments, one of the translation engines (e.g., 110a or 110b) is configured to append the appropriate set of semantic labels using a static criteria, and the other translation engine (e.g., 110b or 1 10a) is configured to append the appropriate set of semantic labels using a dynamic criteria.

In some embodiments, both the first translation engine 110a and the second translation engines 110b are configured, during operation, to append the appropriate set of semantic labels based on a dynamic criterion or dynamic criteria. In some embodiments, the first translation engine 110a is configured to use a first dynamic criteria and the second translation engine 110b is configured to use a second dynamic criteria different from the first dynamic criteria. In some embodiments, the two translation engines 110a and 110b are configured to use the same dynamic criteria.

In some embodiments, each asset in the system 100 has an associated translation engine. In some embodiments, more than one asset can share a translation engine. For example, a group of assets using the same protocol and/or generate data having the same data type can share a common translation engine.

FIG. 2 illustrates a hierarchical visualization of an energy storage system 200, according to an embodiment. The energy system 200 includes a plurality of containers 210a and 210b (only two are labelled for illustrative purposes). The first container 210a includes a pilot 220 (e.g., an energy storage system controller ), a converter 230 (e.g., DC-DC converter, AC-AC converter, etc.), and a storage rack 240 (e.g., a battery rack). The storage rack 240 includes a management device 242 (e.g., a battery management system or BMS) and a plurality of storage cells 245a to 245b (only two are labelled for illustrative purposes). Each storage cell 245a or 245b can further include one or more racks (not shown in FIG. 2), and each rack can further include one or more cells. In this manner, the hierarchical representation of the system 200 is divided into multiple layers, including "system," "container," "storage rack," "storage cell," "rack," "tray," and "cell." In some embodiments, data from an equipment in the system 200 can be appended with a semantic label representing the layer in which the equipment is located. In some embodiments, the lower levels in the system 200 (e.g., levels below storage rack 240) can also include their own module-level BMS controllers that provide control over individual battery cells. Such control can be more granular as compared to the top-level BMS (e.g., 242 or 210) which is providing more supervisory and system level functions.

FIG. 2 uses an energy storage system 200 to illustrate the hierarchical representation. In some embodiments, the hierarchical representation can be used for any other energy system, such as an energy delivery system or a hybrid system configured for both energy storage and delivery.

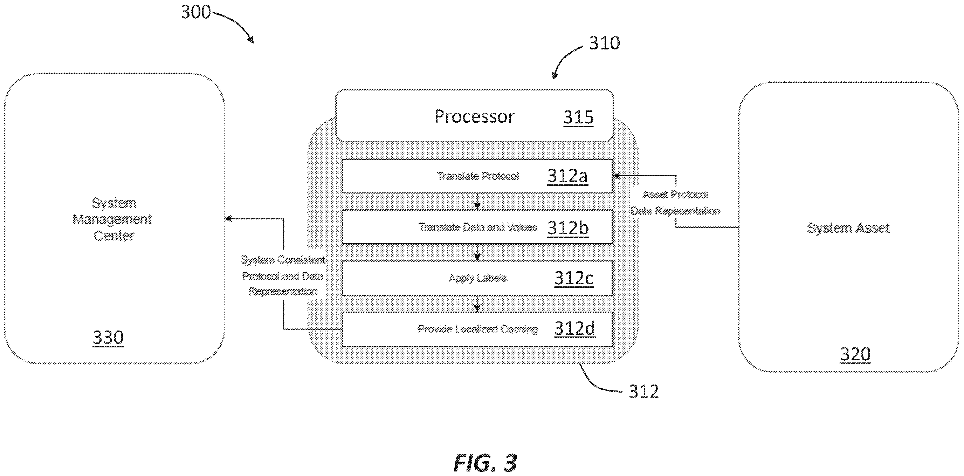

FIG. 3 shows a schematic of a system 300 including an introspection engine 310 for translation and label appending, according to an embodiment. In some embodiments, the introspection engine 310 is substantially similar to the translation engine 110a or 110b shown in FIG. 1 and described above. The introspection engine 310 is operatively coupled to an asset 310 and configured to receive and translate data represented in the protocol used by the asset 310 (also referred to as asset protocol). The translation performed by the introspection engine 310 is configured to generate data represented in a system consistent protocol. On the output end, the introspection engine 310 is operatively coupled to a system management center (SMC) 330 and configured to send the data represented in the system consistent protocol to the SMC 330.

The introspection engine 310 includes a memory 312 and a processor 315. The memory 312 is configured to store processor executable instructions (also referred to as codes) for the processor to 315 to implement one or more methods by executing the codes. In some embodiments, the memory 312 includes codes that can cause the processor 315 to translate the asset protocol into the system consistent protocol at 312a and translate the label and/or the value of the data received from the asset 310 into a system consistent label and/or value at 312b. A label is then applied, at 312c, to the translated data generated from 312a and 312b to generate output data of the introspection engine 310. The memory 312 also includes codes that cause the processor 315 to provide localized caching to the output data, which can be sent to the SMC 330 (e.g., upon request or spontaneously).

In some embodiments, the memory 312 is configured to further store information about the asset 310 as well as other assets in the system 300. For example, the memory 312 can be configured to store hierarchical data (e.g., a hierarchical representation) of the system 300 so as to facilitate the translation.

The memory 312 can include, for example, RAM, a memory buffer, a hard drive, a database, a ROM, an EPROM, an EEPROM, and/or so forth. The processor 315 can include any suitable processor such as, for example, a GPP, a CPU, an APU, a GPU, a network processor, a front-end processor, an ASIC, an FPGA, and/or the like. Thus, the processor 315 can be configured to perform and/or execute a set of instructions, processes, modules, and/or code stored in the memory 315.

In some embodiments, the SMC 330 includes a user interface (not shown in FIG. 3) configured to receive inputs (e.g., query) from users and send outputs to the users. For example, the SMC 330 can be configured to store data received from the introspection engine 310 and the user interface can be configured to allow a user to retrieve data. In some embodiments, the SMC 330 is configured to process the data received from the introspection engine 310. For example, the SMC 330 can be configured to detect health issues based on the data received from the introspection engine 310. In some embodiments, such detection (also referred to as diagnosis) can be performed using machine learning techniques.

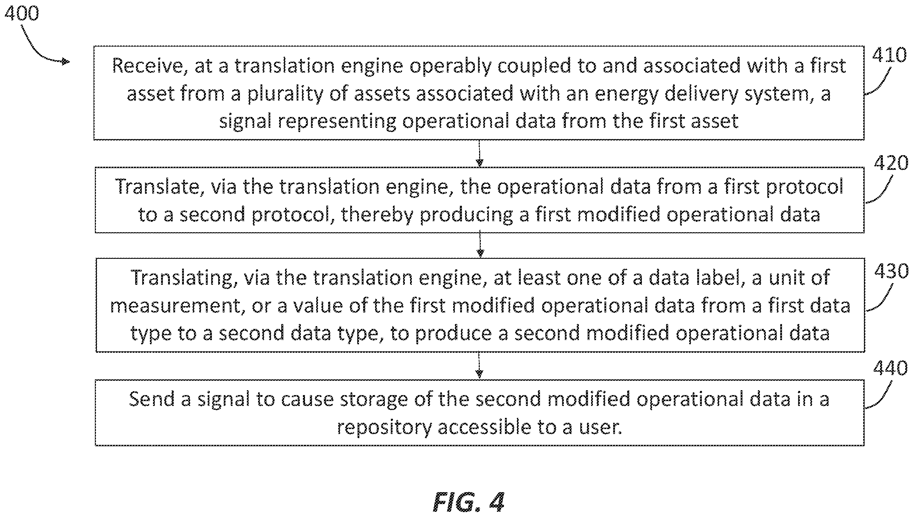

**FIG.** 4 is a flowchart illustrating a method 400 of autonomous monitoring and recovery in hybrid energy management, according to an embodiment. The method 400 includes, at 410, receiving, at a translation engine operably coupled to and associated with a first asset from a plurality of assets associated with an energy delivery system, a signal representing operational data from the first asset. The translation engine can be substantially similar to the translation engine 110a or 110b shown in FIG. 1 or the introspection engine 310 shown in FIG. 3. The first asset can include any equipment in the energy delivery system. For example, the first asset can be substantially similar to the asset 120a or 120b shown in FIG. 1 or the asset 320 shown in FIG. 3.

The method 400 also includes, at 320, translating, via the translation engine, the operational data from a first protocol to a second protocol, thereby producing a first modified operational data. The first protocol and the second protocol can be any protocol described above with reference to FIG. 1. The method 400 further includes, at 430, translating at least one of a data label, a unit of measurement, or a value of the first modified operational data from a first data type to a second data type so as to produce a second modified operational data. At 440, a signal is sent to cause storage of the second modified operational data in a repository accessible to a user. In some embodiments, the repository can be substantially similar to the repository 130 shown in FIG. 1 and described above.

In some embodiments, the method 400 further includes providing the second modified operational data as an input to a machine learning algorithm, which is configured to detect a modification to at least one asset from the plurality of assets. In some embodiments, the machine learning algorithm can be implemented on the SMC 330 shown in FIG. 3 and described above. In some embodiments, the machine learning algorithm can be implemented by a user device. In these embodiments, the second modified operational data can be provided to the user (e.g., via the user interface in the SMC 330) and then used for detecting the asset modification. In some embodiments, the machine learning algorithm is implemented on a cloud platform.

In some embodiments, the method 400 further includes detecting a modification event associated with the first asset (e.g., based on the second modified operational data). In response to detecting the modification event, a signal representing an alert is sent to a compute device. In some embodiments, the compute device is associated with an operator of the energy delivery system. In some embodiments, the compute device is configured to implement a database and store the alert.

In some embodiments, the method 400 further includes detecting a trend of modification associated with the plurality of assets. In response to detecting the trend of modification, a signal representing an alert is sent to a compute device. In these embodiments, the detection of the trend can be based on second modified operational data from multiple assets. In some embodiments, the trend of modification can be used to predict the next modification event, which can be, for example, an indicator of a health issue of the energy delivery system. In other words, the trend of modification can be used to predict potential health issue so as to allow preemptive measures to be taken.

In some embodiments, the method 400 further includes detecting a plurality of modification events associated with the plurality of assets (e.g., based on second modified operational data from these assets). For each modification event, a signal is generated to represent an alert. Accordingly, a plurality of signals are generated. The method 400 also includes grouping at least some of the signals from the plurality of signals into a notification signal based on an attribute of the plurality of signals. The resulting notification signal (instead of the multiple underlying signals) is then sent to a compute device (e.g., associated with an operator of the energy delivery system).

In some embodiments, the attribute of the plurality of signals includes the common label associated with the signals. For example, multiple signals may be associated with the same asset, and each signal can be indicative of a minor health issue that can be left unattended. However, the collection of these multiple signals may indicate a more serious issue and consolidating these signals into a single notification signal can alert the operator of such possibility. In some embodiments, the attribute of the plurality of signals includes the time of the signals. For example, in the event that multiple signals are generated within a short period of time (e.g., a few seconds), it can be more helpful to consolidate these signals into a single notification signal and sent to the user. In some embodiments, the attribute of the plurality of signals includes the size of the signals. For example, several signals may have similar sizes, which may be indicative that they represent the same health issue. In the event, a single notification signal resulted from the consolidation of these signals can be more efficient for an operator to address the issue.

In some embodiments, the method 400 further includes detecting a plurality of modification events associated with the plurality of assets and generating a plurality of signals. Each signal in the plurality of signals is associated with a corresponding modification event in the plurality of modification events and represents an alert. The method 400 also includes sending a first subset of signals in the plurality of signals to a compute device and suppressing a second subset of signals in the plurality of signals. Such suppression can be based on the data label of the second modified operational data associated with the second subset of signals. For examples, the data label may indicate that the second set of signals are cumulative with respect to other signals so it can be unnecessary to send these signals.

In some embodiments, the suppression of the second subset of signals can be based on the relationship between the second subset of signals and other signals. For example, the second subset of signals can indicate a second health issue that is derivative to a first health issue, i.e., the second health issue is caused by the first health issue (also referred to as a root cause). The first health issue is already indicated by one or more signals in the first subset of signals. Therefore, sending the first subset of signals can be sufficient for the operator to address both the first health issue and the second health issue.

In some embodiments, the method 400 also includes presenting the second modified operational data in the form of an interactive map. In some embodiments, the location of the first asset in the energy delivery system is also presented on the interactive map so as to help an operator to quickly pinpoint the potential health issue associated with the second modified operational data. In some embodiments, the location of the first asset is presented based on a hierarchical representation of the energy delivery system (see, e.g., FIG. 2).

In some embodiments, an operator is allowed to click on the interactive map to select one or more other assets, and the second modified operational data associated with the selected asset(s) can be presented on the interactive map in response to the operator's selection. In some embodiments, the operator is allowed to click an equipment in one layer in the hierarchical representation, and such click can cause the interactive map to show more details about the selected layer (e.g., presented as a magnified view of the selected layer).

In some embodiments, the operational data is a first operational data, and the method 400 further includes receiving, at the translation engine, a signal representing a second operational data from the first asset. The method 400 also includes modifying at least one of a protocol, a data label, a unit of measurement, or a value of the second operational data to produce a modified second operational data, which is then used to generate and send a signal data to a compute device for presentation, via a GUI and as a part of a visualization, to the user.

In some embodiments, the repository is configured to be queried using a query that does not include a reference to a storage location. In some embodiments, the method 400 further includes generating a response to the query. In some embodiments, the response (e.g., the requested data) is sent to the user. In some embodiments, the response is filtered before any data is sent to the user. Such filtering can be based on an attribute of the data associated with the response, such as a data label, a threshold, information protection logic, customer licensing configuration, or a protocol to anonymize the data.

In some embodiments, the repository is configured to provide a subscription based data service to users. For example, the user can have an agreement with the operator of the repository, and the agreement can specify the type and/or the amount of data to be provided to the user. In these embodiments, the data label in the retrieved data may indicate that such data is beyond the agreement with the user and therefore is removed from the response to be sent out to the user. In some embodiments, in the event that some data is filtered out, a notification signal can be generated to notify the user of such filtering. The notification signal may also include information about upgrading or updating the service agreement the user has with the operator of the repository.

In some embodiments, the method 400 further includes determining an activity level of the second modified operational data based on the query. The activity level can be used to change the storage protocol of the second modified operational data. For example, the determined activity level is high, the data can be upgraded to "hot data" and transferred to a storage medium having low latency and high throughput. In another example, if the determined activity is low, the data can be downgraded to "cold data" and transferred to a storage medium having a lower associated cost.

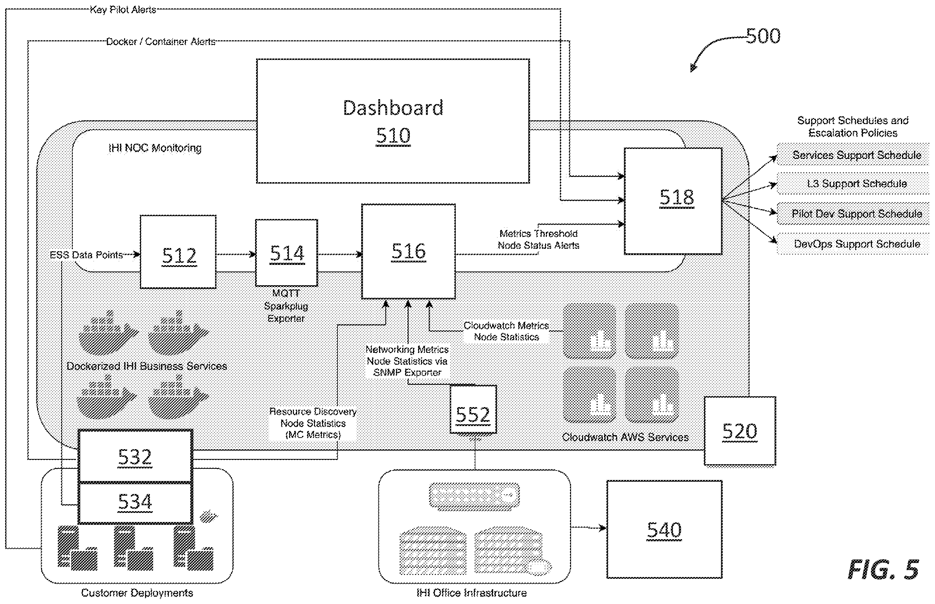

FIG. 5 illustrates a system 500 for data analytics in hybrid energy management, according to an embodiment. The system 500 includes one or more customer deployments 560, which can be, for example, an energy storage system (ESS). The customer deployments 560 can include one or more translation engines (e.g., similar to 110a/b in FIG. 1) to generate system consistent data for further analytics. In some embodiments, the translation engines are implemented by the data analytic system 500 (i.e., the customer deployments 560 can provide asset specific data to the system 500).

A workload and service manager 532 is operatively coupled to the customer deployments 560. In some embodiments, the workload and service manager 532 includes a portable, extensible, and open-source platform for managing containerized workloads and services (e.g., Kubemetes), which can facilitate both declarative configuration and automation. In these embodiments, the processing of data from the customer deployments 560 can be divided into multiple containers. As described herein, containers are similar to virtual machines (VMs), but they have relaxed isolation properties to share the Operating System (OS) among the applications (i.e., they are lightweight). A container can have its own file system, CPU, memory, process space, and more. As they are decoupled from the underlying infrastructure, containers are portable across clouds and OS distributions.

In some embodiments, the workload and service manger 532 can be configured to perform service discovery and load balancing. More specifically, the workload and service manger 532 can be configured to expose a container using the DNS name or the IP address. If traffic to a container is high, the workload and service manager 532 can distribute the network traffic (i.e., load balancing) such that the deployment is stable. In some embodiments, the workload and service manager 532 can be configured to automatically mount a storage system, such as local storages and public cloud providers. In some embodiments, the workload and service manager 532 can be configured to provide automated rollouts and rollbacks, such as automatic creation of new containers, removal of existing containers, and migrating resources from one container to a new container. In some embodiments, the workload and service manager 532 is configured for automatic bin packing, i.e., fitting containers to user specified computing resources (e.g., CPU and memory resources). In some embodiments, the workload and service manager 532 can be configured to restart containers that fail, replace containers, and remove containers that don't respond to user-defined health check.

In some embodiments, the customer deployments 560 are also operatively coupled to an application creator 534 that is configured to create custom applications based on the tasks involved in the data analytics. In some embodiments, the application creator 534 can be based on human machine interface (HMI) and supervisory control and data acquisition (SCADA).

Outputs of the workload and service manger 532 and the application creator 534 are sent to a cloud based computing platform 520 (e.g., Amazon Web Service or AWS). More specifically, output from the application creator 534 (e.g., ESS data points) is sent to a central application creator 512 (e.g., Ignition). The central application creator 512 can be server based and can be connected to multiple systems, including the customer deployments 560. In some embodiments, the central application creator 512 can be installed, deployed, and managed using standard web technologies, including connecting and changing settings, updating projects, and creating new tags from any compute device on the network. In some embodiments, the central application creator 512 can have a scalable modular architecture that allows readily expansion or contraction based on computing loads.

The central application creator 512 is operatively coupled to an MQTT broker 514 (e.g., MQTT Sparkplug), which uses a publish/subscribe architecture in contrast to HTTP and its request/response paradigm. The publish/subscribe architecture is event-driven and enables messages to be pushed to clients. The MQTT broker 514 is configured to dispatch all messages between the senders (e.g., the central application creator 512) and the rightful receivers (e.g., database 516). The MQTT broker 514 allows seamless integration of applications, sensors, devices, and gateways within MQTT infrastructure.

A database 516 is operatively coupled to the MQTT broker 514 and functions as a receiver in the MQTT infrastructure. In some embodiments, the database 516 is configured for event monitoring and alerting (e.g., Prometheus). For example, the database 516 can record real-time metrics in a time series database (allowing for high dimensionality), which can be built using a HTTP pull model, with flexible queries and real-time alerting.

In some embodiments, the database 516 is configured to store data in the form of metrics, with each metric having a name that is used for referencing and querying the metric. In addition, each metric can be characterized by an arbitrary number of key/value pairs (i.e., labels). Labels can include information about the data source and other application-specific breakdown information such as the HTTP status code (e.g., for metrics related to HTTP responses), query method (GET versus POST), and endpoint.

The database 516 is operatively coupled to several components, including the workload and service manager 532, a performance manager 518, an operator infrastructure 550 (via an SNMP manager 552), and a cloud monitor 525. The database 516 is configured to receive data directly from the workload and service manager 532, such as resource discovery node statistics. The performance manager 518 (e.g., Pagerduty) is configured to perform real-time adaptive performance management to intelligently manage IT operations and computing resources in real-time amidst a noisy, complex, distributed, heterogeneous, and dynamically changing environment. More information about the performance manager 518 can be found in, e.g., U.S. Patent No. 9811795, entitled "Real-time adaptive operations performance management system using event clusters and trained models," grated November 7, 2017, which is incorporated herein in its entirety.

The operator infrastructure 550 can include infrastructure associated with the provider of the data analytics service. The SNMP manager 552 (i.e., simple network management protocol manager) is configured to allow IT administrators to manage equipment and diagnose problems. The SNMP manager 552 can be configured to perform one or more functions, including but not limited to querying agents, receiving responses from agents, setting variables in agents, and acknowledging asynchronous events from agents. An agent in this SNMP configuration includes a program that is configured to collect the management information from the monitored device locally and makes the information available to the SNMP manager 552 (e.g., upon query).

The operator infrastructure 550 is also operatively coupled to a network management platform 540 (e.g., Aruba Central), which is configured to manage one or more networks, e.g., wireless networks, WANs, and/or wired networks. Along with device and network management functions, the network management platform can also be configured to provide customized guest access, client presence, and service assurance analytics.

The cloud monitor 525 is configured to monitor applications on the cloud computing platform 520, respond to system-wide performance changes, optimize resource utilization, and generate a unified view of operational health. For example, the cloud monitor 525 can collect monitoring and operational data in the form of logs, metrics, and events, and send the collected information (e.g., node statistics) to the database 516. Therefore, the cloud monitor 525 can be used to detect anomalous behavior in the system 500, set alarms, visualize logs and metrics side by side, take automated actions, troubleshoot issues, and discover insights to maintain smooth operation of the applications.

In some embodiments, the central application creator 512, the MQTT broker 514, the database 516, and the performance manager 518 can be presented on a dashboard 510 (e.g., Grafana). In some embodiments, the dashboard 510 can be configured to operate as a web application. In some embodiments, the dashboard 510 can be configured to support graphite, InfluxDB, Prometheus, or opentsdb as backends.

In operation, the performance manager 518 is also configured to receive data from the customer deployments 560 (e.g., key pilot alerts) and the workload and service manager 532 (e.g., docker/container alerts). The performance manager 518 is configured to generate several support schedules, such as service support schedule, layer-3 (L3) support schedule, pilot development support schedule, and DevOps support schedule.

While various embodiments have been described and illustrated herein, a variety of other means and/or structures for performing the function and/or obtaining the results and/or one or more of the advantages described herein, and each of such variations and/or modifications are possible. More generally, all parameters, dimensions, materials, and configurations described herein are meant to be examples and that the actual parameters, dimensions, materials, and/or configurations will depend upon the specific application or applications for which the disclosure is used. It is to be understood that the foregoing embodiments are presented by way of example only and that other embodiments may be practiced otherwise than as specifically described and claimed. Embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Also, various concepts may be embodied as one or more methods, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B') can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

### Embodiments

**Various embodiments of the invention are defined in the caluses below:**
1. A system, comprising:
   a first translation engine operably coupled to and associated with a first asset having a first protocol and configured to generate data having a first data type, and
   a second translation engine operably coupled to and associated with a second asset having a second protocol different from the first protocol and configured to generate data having a second data type different from the first data type,
   the first translation engine configured, during operation, to
      receive a signal, representing first data of the first datatype, from the first asset,
      translate the first data from the first protocol to a third protocol.
      translate at least one of a label or a value of the first data from the first data type to produce a first transformed data,
      append a first set of at least one semantic label to the first transformed data, the first set of at least one semantic label representing a relationship between the first asset and the second asset, and
      send a signal to cause storage of the first transformed data in a repository accessible to a user, and
   the second translation engine configured, during operation, to:
      receive a signal, representing second data of the second data type, from the second asset,
      translate the second data from the second protocol to the third protocol,
      translate at least one of a label or a value of the second data from the second data type, to produce a second transformed data,
      append a second set of at least one at least one semantic label to the second transformed data, the second set of at least one semantic label representing a relationship between the first asset and the second asset, and
      send a signal to cause storage of the second transformed data in the repository,
      the storage of the first transformed data and the storage of the second transformed data occurring in time-series order,
      the repository configured to be queried using a query that does not include a reference to a storage location.
2. The system of clause 1, wherein the system is a renewable energy system.
3. The system of clause 1, wherein at least one of the first transformed data or the second transformed data is presented to the user in the form of an interactive map.
4. The system of clause 1, further comprising a memory communicably coupled to the first translation engine and the second translation engine, the memory storing hierarchical data representing relationships between a plurality of assets of the system, the plurality of assets including the first asset and the second asset.
5. The system of clause 1, wherein each of the first asset and the second asset is associated with a single energy storage container.
6. The system of clause 1, wherein the first asset is included within a first energy system and the second asset is included within a second energy system different from the first energy system.
7. The system of clause 1. wherein each of the first asset and second asset is included within a common energy system.
8. The system of clause 1. wherein the first translation engine is configured, during operation, to append the first set of at least one semantic label to the first transformed data based on a static criteria.
9. The system of clause 8, wherein the static criteria is a user-specified parameter.
10. The system of clause 1, wherein the first translation engine is configured, during operation, to append the first set of at least one semantic label to the first transformed data based on a dynamic criteria.
11. The system of clause 10, wherein the dynamic criteria includes an algorithm.
12. The system of clause 1, wherein:
   the first translation engine is configured, during operation, to append the first set of at least one semantic label to the first transformed data based on a static criteria; and
   the second translation engine is configured, during operation, to append the first set of at least one semantic label to the first transformed data based on a static criteria.
13. The system of clause 1, wherein:
   the first translation engine is configured, during operation, to append the first set of at least one semantic label to the first transformed data based on a static criteria; and
   the second translation engine is configured, during operation, to append the first set of at least one semantic label to the first transformed data based on a dynamic criteria.
14. The system of clause 1, wherein:
   the first translation engine is configured, during operation, to append the first set of at least one semantic label to the first transformed data based on a dynamic criteria; and
   the second translation engine is configured, during operation, to append the first set of at least one semantic label to the first transformed data based on a dynamic criteria.
15. A method, comprising:
   receiving, at a translation engine operably coupled to and associated with a first asset from a plurality of assets associated with an energy delivery system, a signal representing operational data from the first asset;
   translating, via the translation engine, the operational data from a first protocol to a second protocol, thereby producing a first modified operational data;
   translating, via the translation engine, at least one of a data label, a unit of measurement, or a value of the first modified operational data from a first data type to a second data type, to produce a second modified operational data; and
   sending a signal to cause storage of the second modified operational data in a repository accessible to a user.
16. The method of clause 15, further comprising:
   providing the second modified operational data as an input to a machine learning algorithm; and
   detecting, using the machine learning algorithm, a modification to at least one asset from the plurality of assets.
17. The method of clause 15, further comprising:
   detecting a modification event associated with the first asset; and
   sending, in response to detecting the modification event, a signal representing an alert to a compute device.
18. The method of clause 15, further comprising:
   detecting a trend of modification associated with the plurality of assets; and
   sending, in response to detecting the trend of modification, a signal representing an alert to a compute device.
19. The method of clause 15, further comprising:
   detecting a plurality of modification events associated with the plurality of assets;
   generating a plurality of signals, each signal in the plurality of signals associated with a corresponding modification event in the plurality of modification events and representing an alert; and
   grouping at least some of the signals from the plurality of signals into a notification signal based on an attribute of the plurality of signals, the attribute of the plurality of signals including at least one of a common label, a time, or a size of the plurality of signals.
20. The method of clause 15, further comprising:
   detecting a plurality of modification events associated with the plurality of assets;
   generating a plurality of signals, each signal in the plurality of signals associated with a corresponding modification event in the plurality of modification events and representing an alert; and
   sending a first subset of signals in the plurality of signals to a compute device; and
   suppressing a second subset of signals in the plurality of signals based on the data label of the second modified operational data associated with the second subset of signals.
21. The method of clause 15, further comprising:
   presenting the second modified operational data in the form of an interactive map.
22. The method of clause 15, wherein the operational data is a first operational data, the method further including:
   receiving, at the translation engine, a signal representing a second operational data from the first asset;
   modifying at least one of a protocol, a data label, a unit of measurement, or a value of the second operational data to produce a modified second operational data; and
   sending a signal representing the modified second operational data to a compute device for presentation, via a GUI and as a part of a visualization, to the user.
23. The method of clause 15, wherein the repository is configured to be queried using a query that does not include a reference to a storage location.
24. The method of clause 23, further comprising:
   generating a response to the query; and
   filtering the response based on an attribute of data associated with the response, the attribute including at least one of a data label, a threshold, information protection logic, customer licensing configuration, or a protocol to anonymize the data.
25. The method of clause 23, further comprising:
   determining an activity level of the second modified operational data based on the query; and
   changing a storage protocol of the second modified operational data based on the activity level of the second modified operational data.

## Claims

1. A system, comprising:
a first translation engine operably coupled to and associated with a first asset having a first protocol and configured to generate data having a first data type; and
a second translation engine operably coupled to and associated with a second asset having a second protocol different from the first protocol and configured to generate data having a second data type different from the first data type,
the first translation engine configured, during operation, to:
receive a signal, representing first data of the first data type, from the first asset,
translate the first data from the first protocol to a third protocol,
translate at least one of a label or a value of the first data from the first data type, to produce a first transformed data,
append a first set of at least one semantic label to the first transformed data, the first set of at least one semantic label representing a relationship between the first asset and the second asset, and
send a signal to cause storage of the first transformed data in a repository accessible to a user, and
the second translation engine configured, during operation, to:
receive a signal, representing second data of the second data type, from the second asset,
translate the second data from the second protocol to the third protocol,
translate at least one of a label or a value of the second data from the second data type, to produce a second transformed data,
append a second set of at least one at least one semantic label to the second transformed data, the second set of at least one semantic label representing a relationship between the first asset and the second asset, and
send a signal to cause storage of the second transformed data in the repository,
the storage of the first transformed data and the storage of the second transformed data occurring in time-series order,
the repository configured to be queried using a query that does not include a reference to a storage location.

2. The system of claim 0, wherein the system is a renewable energy system.

3. The system of claim 0, wherein at least one of the first transformed data or the second transformed data is presented to the user in the form of an interactive map.

4. The system of claim 0, further comprising a memory communicably coupled to the first translation engine and the second translation engine, the memory storing hierarchical data representing relationships between a plurality of assets of the system, the plurality of assets including the first asset and the second asset.

5. The system of claim 0, wherein each of the first asset and the second asset is associated with a single energy storage container.

6. The system of claim 0, wherein either: a) the first asset is included within a first energy system and the second asset is included within a second energy system different from the first energy system; or
b) each of the first asset and second asset is included within a common energy system.

7. The system of claim 0, wherein either:
a) the first translation engine is configured, during operation, to append the first set of at least one semantic label to the first transformed data based on a static criteria, wherein the static criteria is optionally a user-specified parameter; or
b) the first translation engine is configured, during operation, to append the first set of at least one semantic label to the first transformed data based on a dynamic criteria, wherein the dynamic criteria optionally includes an algorithm.

8. The system of claim 0, wherein:
a) the first translation engine is configured, during operation, to append the first set of at least one semantic label to the first transformed data based on a static criteria; and the second translation engine is configured, during operation, to append the first set of at least one semantic label to the first transformed data based on a static criteria; or
b) the first translation engine is configured, during operation, to append the first set of at least one semantic label to the first transformed data based on a static criteria; and the second translation engine is configured, during operation, to append the first set of at least one semantic label to the first transformed data based on a dynamic criteria or
c) the first translation engine is configured, during operation, to append the first set of at least one semantic label to the first transformed data based on a dynamic criteria; and the second translation engine is configured, during operation, to append the first set of at least one semantic label to the first transformed data based on a dynamic criteria.

9. A method, comprising:
receiving, at a translation engine operably coupled to and associated with a first asset from a plurality of assets associated with an energy delivery system, a signal representing operational data from the first asset;
translating, via the translation engine, the operational data from a first protocol to a second protocol, thereby producing a first modified operational data;
translating, via the translation engine, at least one of a data label, a unit of measurement, or a value of the first modified operational data from a first data type to a second data type, to produce a second modified operational data; and
sending a signal to cause storage of the second modified operational data in a repository accessible to a user.

10. The method of claim 9, further comprising:
providing the second modified operational data as an input to a machine learning algorithm; and
detecting, using the machine learning algorithm, a modification to at least one asset from the plurality of assets.

11. The method of claim 9, further comprising either:
a) detecting a modification event associated with the first asset; and sending, in response to detecting the modification event, a signal representing an alert to a compute device; or
b) detecting a trend of modification associated with the plurality of assets; and sending, in response to detecting the trend of modification, a signal representing an alert to a compute device.

12. The method of claim 9, further comprising:
detecting a plurality of modification events associated with the plurality of assets;
generating a plurality of signals, each signal in the plurality of signals associated with a corresponding modification event in the plurality of modification events and representing an alert; and either:
a) grouping at least some of the signals from the plurality of signals into a notification signal based on an attribute of the plurality of signals, the attribute of the plurality of signals including at least one of a common label, a time, or a size of the plurality of signals; or
b) sending a first subset of signals in the plurality of signals to a compute device; and
suppressing a second subset of signals in the plurality of signals based on the data label of the second modified operational data associated with the second subset of signals.

13. The method of claim 9, further comprising:
presenting the second modified operational data in the form of an interactive map.

14. The method of claim 9, wherein the operational data is a first operational data, the method further including:
receiving, at the translation engine, a signal representing a second operational data from the first asset;
modifying at least one of a protocol, a data label, a unit of measurement, or a value of the second operational data to produce a modified second operational data; and
sending a signal representing the modified second operational data to a compute device for presentation, via a GUI and as a part of a visualization, to the user.

15. The method of claim 9, wherein the repository is configured to be queried using a query that does not include a reference to a storage location, the method optionally further comprising either:
a) generating a response to the query; and filtering the response based on an attribute of data associated with the response, the attribute including at least one of a data label, a threshold, information protection logic, customer licensing configuration, or a protocol to anonymize the data; or
b) determining an activity level of the second modified operational data based on the query; and changing a storage protocol of the second modified operational data based on the activity level of the second modified operational data.
